# EUROPÄISCHE PATENTANMELDUNG

(11) **EP 4 509 801 A1**
(43) Veröffentlichungstag der Anmeldung: **19.02.2025**
(21) Anmeldenummer: 23191723.8
(22) Anmeldetag: 16.08.2023
(51) Int. Cl.: G01F 1/696, G01F 25/10

(54) **SENSORANORDNUNG, GASANALYSATOR, VERFAHREN ZUR KALIBRIERUNG, VERFAHREN ZUR ZUSTANDSÜBERWACHUNG, COMPUTERPROGRAMMPRODUKT UND COMPUTERLESBARES MEDIUM**

(71) Anmelder: Siemens Aktiengesellschaft, 80333 München (DE)
(72) Erfinder: Schmidt, Benjamin, 76187 Karlsruhe (DE); Winnertz, Patrick, 68789 St. Leon-Rot (DE)
(74) Vertreter: Siemens Patent Attorneys

(57) **Zusammenfassung**

Die Erfindung betrifft eine Sensoranordnung (1) mit wenigstens zwei bevorzugt thermischen Strömungssensoren (S1, S2), die in einer Brückenschaltung mit zwei Zweigen (2, 3) angeordnet sind, wobei sich jeweils wenigstens ein Strömungssensor (S1) in einem der beiden Zweige (2, 3) befindet, und wobei die Strömungssensoren (S1, S2) jeweils einen Grundwiderstandswert aufweisen, und die Grundwiderstandswerte der Strömungssensoren (S1, S2), insbesondere fertigungsbedingt, voneinander abweichen können, wobei eine Kompensationseinrichtung (10) mit wenigstens einem bevorzugt digital einstellbaren Widerstandselement (11) vorgesehen ist, mittels derer für die Abweichung der Grundwiderstandswerte der wenigstens zwei Strömungssensoren (S1, S2) im Messbetrieb kompensiert werden kann. Darüber hinaus betrifft die Erfindung einen Gasanalysator mit wenigstens einer solchen Sensoranordnung (1), ein Verfahren zur Kalibrierung sowie ein Verfahren zur Zustandsüberwachung wenigstens einer solchen Sensoranordnung (1), ein Computerprogrammprodukt und ein computerlesbares Medium.

## Beschreibung

Die Erfindung betrifft eine Sensoranordnung mit wenigstens zwei bevorzugt thermischen Strömungssensoren, die in einer Brückenschaltung mit zwei Zweigen angeordnet sind, wobei sich jeweils wenigstens ein Strömungssensor in einem der beiden Zweige befindet, und wobei die Strömungssensoren jeweils einen Grundwiderstandswert aufweisen, und die Grundwiderstandswerte der Strömungssensoren, insbesondere fertigungsbedingt, voneinander abweichen können bzw. abweichen. Darüber hinaus betrifft die Erfindung einen Gasanalysator mit wenigstens einer solchen Sensoranordnung, ein Verfahren zur Kalibrierung sowie ein Verfahren zur Zustandsüberwachung wenigstens einer solchen Sensoranordnung, ein Computerprogrammprodukt und ein computerlesbares Medium.

Es sind Sensoranordnungen bekannt, die mehrere insbesondere thermische Strömungssensoren nutzen, die in einer Brückenschaltung betrieben werden. Dabei sind z.B. zwei oder vier Strömungssensoren gemeinsam in einer Wheatstone-Brücke angeordnet. Entsprechende Sensoranordnungen finden u.a. in Gasanalysatoren Verwendung. Hier seien als beispielhafte, am Markt erhältliche Produkte der ULTRAMAT 23 sowie ULTRAMAT 6 der Siemens Aktiengesellschaft genannt.

Bei thermischen Strömungssensoren wird genutzt, dass deren Widerstand stark temperaturabhängig ist. Wenn über diese oder durch diese ein zu vermessender Fluidstrom geführt wird, wirkt dieser eine kühlende Wirkung aus, was in eine Änderung des Widerstandes der Sensoren resultiert.

Die Fertigung von Strömungssensoren umfasst verschiedene Herstellungsschritte einschließlich der manuellen Handhabung und der Temperaturwechselbeanspruchung, was sich zu gewissen Abweichungen der Grundwiderstände, auch baugleicher Strömungssensoren, und somit in der Messbrücke aufsummieren kann. Der Anmelderin ist bekannt, dass die elektrische Leitfähigkeit zwischen zwei Wafern bis zu 20% betragen kann. Die relative Abweichung der Grundwiderstände zweier Strömungssensoren kann mit anderen Worten zum Beispiel 20% betragen. Da oftmals ein Full-Wafer Bonding erfolgt, um hunderte von Sensoren auf einmal zusammenzubauen, ist eine manuelle Auswahl von individuellen Sensoren, insbesondere mit übereinstimmenden Grundwiderstandswerten, nicht möglich.

Große statische Abweichungen der Sensorgrundwiderstände führen zu einer nicht abgeglichenen Messbrückenschaltung, mit der verschiedene Probleme einhergehen. Die Unterdrückung der Brückenversorgungsspannung ist reduziert, was zu elektrischem Rauschen führt und die elektrische Signalverarbeitung, insbesondere des bzw. der Messsignale, komplizierter ausfallen lässt.

Insbesondere im Falle von Gasanalysatoren werden alternierende AC-Signale verwendet, um Gaskonzentrationen zu detektieren. Beispielsweise wird ein zu vermessender Fluidstrom bzw. ein Referenzgas abwechselnd aus entgegengesetzten Richtungen über ein Paar von zwei hintereinander bzw. übereinander angeordneten Strömungssensoren, die in verschiedenen Brückenzweigen liegen, geführt, so dass sich die temperaturabhängigen Widerstände der beiden Strömungssensoren alternierend ändern, was in einen AC-Anteil der Brückenspannung resultiert.

In der Theorie sollte eine nicht abgeglichene BrückenKonfiguration keinen starken Einfluss auf eine niederfrequentes AC-Signal, das beispielweise eine Frequenz im Bereich von weniger als 20 Hz aufweist, haben. Vom elektronischen Gesichtspunkt aus betrachtet sind die praktischen Implementierungsanforderungen an eine mit geringem Rauschen und niedrigem Drift behaftete Umsetzung allerdings nicht derart einfach.

Um dem Nachteil eines DC-Offsets, welches mit den insbesondere fertigungsbedingten statischen Abweichungen der Sensorgrundwiderstände einer Messbrücke und deren resultierender Unabgeglichenheit einhergeht, zu begegnen, könnte das Signal prinzipiell über einen Koppelkondensator bereinigt werden, um in einer Verstärkerstufe verstärkt zu werden. Der Koppelverstärker, insbesondere ein AC-gekoppelter Verstärker, könnte dann nur oder hauptsächlich den AC-Anteil des Signals verstärken. Ein solcher Verstärker wäre über zwei Kapazitäten, für jeden der beiden Brückenzweige eine, mit der Brücke zu verbinden. Für niederfrequente Signale erfordert dies jedoch sehr große, hochstabile Kapazitäten. Physikalische Beschränkungen realer Kapazitäten (insbesondere Kapazitätsdriften, thermische Stabilität, dielektrische Absorption, Leckströme, mikrophonische Effekte) begrenzen die Nutzbarkeit von AC-Kopplungs-Konzepten in einer Brücken-Vorverstärker-Konfiguration.

Der Anmelderin ist ein Konzept bekannt, mit welchem dieser Problematik bisher begegnet wurde. Dabei wird ein DC-gekoppelter Vorverstärker mit geringerem Verstärkungsfaktor genutzt, um die Brückenspannung inklusive des von den Sensorwiderstandsabweichungen generierten DC-Offsets zu verstärken. Auf diesem ersten, DC-gekoppelten Vorverstärker folgt noch eine zweite Verstärkerstufe, die einen AC-gekoppelten, zweiten Vorverstärker mit höherem Verstärkungsfaktor nutzt. Der erste und zweite Verstärker können über nur eine hochqualitative Kopplungs-Kapazität, insbesondere einen Folien-Kondensator, miteinander verbunden sein. Geeignete Kapazitäten zeichnen sich jedoch durch eine vergleichsweise große räumliche Ausdehnung aus.

Weiterhin ist zu beachten, dass mit immer größeren erlaubten Abweichungen der Widerstände der Strömungssensoren ein immer niedrigerer Verstärkungsfaktor der ersten Vorverstärkungsstufe einhergehen müsste, um innerhalb der erlaubten Verstärker-Spannungsgrenzen zu liegen, da das DC-Ungleichgewicht den Verstärker nicht saturieren darf. Eine größere Verstärkungsstufe wäre hier jedoch zu bevorzugen, da diese Stufe die Rausch-Performanz der Anordnung definiert. Kleine Signale, die aufgrund von Rauschen in der ersten Verstärkerstufe verloren gehen, können später nicht zurückgewonnen werden.

Dies alles führt dazu, dass nur gewisse Abweichungen der statischen Grundwiderstände zulässig sind. Wird die zulässige Grenze von einem einzelnen Strömungssensor bzw. einer fertig zusammengebauten Sensoranordnung mit zwei oder mehr solcher überschritten, stellt der Sensor bzw. sogar die ganze Sensoranordnung Ausschuss dar, der keiner Nutzung zugeführt werden kann.

Es ist daher eine Aufgabe der vorliegenden Erfindung, eine Sensoranordnung der eingangs genannten Art anzugeben, die sich durch eine möglichst hohe Unterdrückung der Brückenversorgungsspannung und möglichst niedriges Signalrauschen auszeichnet, und mit der gleichzeitig ein reduzierter Ausschuss einhergeht.

Diese Aufgabe wird bei einer Sensoranordnung der eingangs genannten Art dadurch gelöst, dass eine Kompensationseinrichtung mit wenigstens einem bevorzugt digital einstellbaren Widerstandselement vorgesehen ist, mittels derer für die Abweichung der Grundwiderstandswerte der wenigstens zwei Strömungssensoren im Messbetrieb kompensiert werden kann.

Die Kompensationseinrichtung ist zweckmäßiger Weise in die Brückenschaltung integriert, insbesondere mit wenigstens einem der Zweige, bevorzug beiden Zweigen, verbunden.

Bevorzugt ist die Kompensationseinrichtung derart ausgebildet und insbesondere in der Brückenschaltung angeordnet, dass mittels dieser einer gleichgewichtigen Stromversorgung der beiden Zweige entgegengewirkt werden kann, um so für die Abweichung der Grundwiderstandswerte der Strömungswiderstände zu kompensieren.

Der Grundgedanke der vorliegenden Erfindung besteht mit anderen Worten darin, Grundwiderstandsabweichungen von in Brückenkonfiguration betriebenen Strömungssensoren, bzw. deren negative Auswirkung im Messbetrieb, gezielt durch Vorsehen einer geeigneten Kompensationseinrichtung zu begegnen. Dabei hat sich als besonders zweckmäßig erwiesen, mittels einer solchen das Versorgungsleistungsgleichgewicht auf die bzw. über die beiden Zweige der Brückenschaltung gezielt leicht ins Ungleichgewicht zu bringen, um so der Unabgeglichenheit infolge der verschiedenen Grundwiderstände entgegenzuwirken. Die Kompensationseinrichtung ist zweckmäßiger Weise entsprechend ausgebildet.

Unter kompensieren ist vorliegend zu verstehen, dass auf bestehende Abweichungen der statischen Grundwiderstände zurückgehende unerwünschte Auswirkungen, wie zum Beispiel ein DC-Offset bzw. DC-Signalanteil in der Brückenspannung, im Messbetrieb vollständig ausgeräumt oder zumindest reduziert werden bzw. sind.

Die Kompensationseinrichtung umfasst wenigstens ein einstellbares Widerstandselement. Man kann auch von einem einstellbaren oder steuerbaren resistiven Element sprechen. Es handelt sich insbesondere um wenigstens ein Element, dessen Widerstand durch Einstellung veränderbar ist.

Ein einstellbares Widerstandselement kann auch eine Anordnung von mehreren individuell ansteuerbaren Teilwiderständen aufweisen, durch deren jeweilige Zu- bzw. Abschaltung der sich insgesamt ergebende (Gesamt-)Widerstandswert anpassbar ist.

Die Kompensationseinrichtung kann nur eines oder auch mehrere einstellbare Widerstandselemente umfassen, beispielsweise für jeden der beiden Zweige bzw. für jeden der wenigstens zwei Strömungssensoren eines.

Durch die erfindungsgemäße Nutzung einer Kompensationseinrichtung wird es einerseits möglich, Strömungssensoren auch mit größeren Abweichungen hinsichtlich ihrer statischen Grundwiderstandswerte zu tolerieren. Hierdurch kann der Ausschuss deutlich reduziert werden. Gleichzeitig zeichnet sich die erfindungsgemäße Sensoranordnung durch eine hohe Unterdrückung des DC-Signalanteils aus. Das Brückenversorgungsrauschen gleicht sich in einer abgeglichenen Brücke aus. Dies resultiert in ein niedrigeres Signalrauschen.

Unter dem Grundwiderstand ist insbesondere ein statischer bzw. der statische Widerstand des jeweiligen Strömungssensors zu verstehen. Zwei oder mehr Strömungssensoren zeichnen sich durch den gleichen Grundwiderstand aus, wenn sie bei gleicher Temperatur, von zum Beispiel 20° Celsius, den gleichen Widerstandswert aufweisen. Es liegt eine Abweichung der Grundwiderstände von zwei oder mehr Strömungssensoren vor, wenn sich deren Widerstandswerte - betrachtet bei der gleichen Temperatur von zum Beispiel 20° Celsius, unterscheiden. Für baugleiche Strömungssensoren können solche Abweichungen etwa fertigungsbedingt sein, wie weiter oben erläutert. Man kann den Grundwiderstand auch als statischen Widerstand und bestehende Abweichungen der Grundwiderstände von zwei oder mehr Strömungssensoren als statische Abweichungen deren Widerstände auffassen bzw. bezeichnen. Abweichungen der Grundwiderstände der Strömungssensoren einer Sensoranordnung liegen auch außerhalb des Messbetriebes vor, wenn gerade keine temperaturabhängigen, dynamischen Widerstandsänderungen der Strömungssensoren zur Messung anderer physikalischer Größen genutzt werden.

Das wenigstens eine einstellbare Widerstandselement kann beispielsweise wenigstens einen Digital-zu-Analog-Wandler (kurz DAC) umfassen oder durch einen solchen gegeben sein. Der oder im Falle mehrerer, beispielsweise zwei, der jeweilige DAC kann einen unipolaren oder bipolaren Spannungsausgang aufweisen. Der bzw. der jeweilige DAC ist zweckmäßiger Weise mit einem Brückenzweig verbunden. Es gilt insbesondere, dass für den Fall, dass die Kompensationseinrichtung nur einen DAC aufweist, der mit nur einem der beiden Brückenzweige verbunden ist, dieser einen bipolaren, mit dem entsprechenden Zweig verbundenen Spannungsausgang aufweist. Ist für jeden der beiden Zweige je ein DAC vorgesehen, dessen Spannungsausgang mit dem jeweiligen Zweig verbunden ist, können die Spannungsausgänge auch unipolar sein.

In besonders vorteilhafter Ausgestaltung der Erfindung ist das wenigstens eine einstellbare Widerstandselement als bevorzugt digital einstellbares Potentiometer ausgebildet oder umfasst wenigstens einen solchen.

Mit wenigstens einem Potentiometer, bei dem in an sich bekannter Weise der Widerstandswert mechanisch oder auch elektronisch veränderbar ist, kann insbesondere ein Versorgungsleistungsgleichgewicht auf besonders geeignete Weise leicht verschoben werden, um für die Unabgeglichenheit in Folge der abweichenden Grundwiderstände zu kompensieren.

Das wenigstens eine Potentiometer kann in Weiterbildung als Spannungsteiler geschaltet sein, zweckmäßiger Weise als Spannungsteiler für die beiden Zweige der Brückenschaltung. Das wenigstens eine Potentiometer kann in an sich bekannter Weise drei Abschlüsse aufweisen. Dann gilt bevorzugt, dass jeweils einer der drei Anschlüsse mit einem der Brückenzweige verbunden ist, dies optional über wenigstens einen festen Widerstand. Ein solcher kann der Begrenzung dienen.

Ist das wenigstens eine Potentiometer digital einstellbar, kann mit anderen Worten dessen Widerstandswert durch digitale Ansteuerung verändert werden, ist eine besonders bequeme und zuverlässige Kompensation, beispielsweise auch softwaregestützt, möglich.

Bei digitalen Potentiometern, die auch kurz als Digipots bzw. Digipotis bezeichnet werden, handelt es sich um digital ansteuerbare Elemente bzw. Komponenten, welche die analoge Funktion eines klassischen, mechanisch einstellbaren Potentiometers "nachahmen". Digitale Potentiometer können zum Beispiel wenigstens einen resistiven Digital-zu-Analog-Wandler (englisch: resistive digital-to-analog converter), insbesondere mit mehreren in Reihe geschalteten Widerständen, umfassen oder als ein solcher Wandler ausgebildet sein. Digitale Potentiometer können auch wenigstens eine Widerstandsleiter, insbesondere wenigstens eine R-2R-Leiter, umfassen oder hierdurch gegeben sein.

Es ist sowohl möglich, dass die Kompensationseinrichtung nur ein digitales oder mechanisches Potentiometer umfasst oder dadurch gegeben ist, als auch, dass diese mehrere digitale und/oder mechanische Potentiometer aufweist, z.B. eines für jeden der beiden Zweige der Brückenschaltung bzw. eines für jeden der wenigstens zwei Strömungssensoren.

Die zwei oder mehr Strömungssensoren der erfindungsgemäßen Sensoranordnung sind zweckmäßiger Weise zum Erfassen der Strömungsgeschwindigkeit eines Fluids und/oder der Konzentration eines solchen ausgebildet.

In der Regel werden die Strömungssensoren der erfindungsgemä-βen Sensoranordnung baugleich ausgebildet sein. So lässt sich die Sensoranordnung besonders einfach und kostengünstig fertigen und es kann eine symmetrische Anordnung erhalten werden.

Die Erfindung hat sich als ganz besonders geeignet für thermische Strömungssensoren erwiesen. Solche umfassen üblicher Weise wenigstens eine Leitung, die im Messbetrieb von einem Gleichstrom durchflossen wird und sich erwärmt. Die wenigstens eine Leitung kann insbesondere metallisch sein bzw. dotiertes Silizium umfassen oder daraus bestehen. Wird die wenigstens eine Leitung von einem Fluid umströmt bzw. überströmt, erfährt sie einen Kühleffekt, was zu einer Widerstandsänderung führt, die in der Brückenkonfiguration sehr genau, insbesondere als z.B. von der Fluidkonzentration abhängige Brückenverstimmung, messbar ist. Mitunter wird die wenigstens eine Leitung auch als Filament bezeichnet. Ein thermischer Strömungssensor kann nur eine solche Leitung, insbesondere nur ein solches Filament umfassen oder auch mehrere parallel geschaltete Leitungen bzw. Filamente. Die (jeweilige) Leitung bzw. das (jeweilige) Filament kann ein Mäander ausbilden.

Umfasst die erfindungsgemäße Sensoranordnung zwei oder mehr thermische Strömungssensoren, gilt weiter bevorzugt, dass diese als Mikroströmungsfühler ausgebildet sind oder wenigstens einen solchen umfassen. Mikroströmungsfühler können insbesondere auch der Erfassung besonders kleiner Strömungen dienen. Es können u.a. Mikroströmungsfühler Verwendung finden, wie sie in der WO 2009/153099 A1 beschrieben sind, wobei dies rein beispielhaft zu verstehen ist und auch Mikroströmungsfühler anderen Aufbaus zum Einsatz kommen können.

In vorteilhafter Weiterbildung umfasst die erfindungsgemäße Sensoranordnung ferner einen, beispielsweise genau einen Vorverstärker, mit dem die Spannungsdifferenz zwischen den beiden Zweigen, mit anderen Worten die Brückenspannung, verstärkt werden kann. Der Vorverstärker ist bevorzugt durch einen DC-gekoppelten Vorverstärker gegeben bzw. entsprechend verschaltet. Ist (genau) ein Vorverstärker vorhanden, kann sich dieser zum Beispiel durch einen Verstärkungsfaktor von 1000 oder mehr auszeichnen, bevorzugt durch einen Verstärkungsfaktor, der im Bereich von 1000 bis 5000 liegt.

Die erfindungsgemäß vorgesehene Kompensationseinrichtung macht es mit anderen Worten auch möglich, nur einen DC-gekoppelten Vorverstärker mit hohem Verstärkungsfaktor nutzen zu können. Dies, da die Gefahr einer Saturierung des Vorverstärkers infolge der Unabgeglichenheit ausgeräumt oder zumindest stark reduziert werden kann. Die erfindungsgemäße Sensoranordnung kann im Ergebnis mit weniger Bauteilen auskommen, als die konventionelle Lösung mit zwei Verstärkerstufen, was deren Kosten und Ausdehnung reduzieren und die Fertigung vereinfachen kann. Ein DC-gekoppelter Vorverstärker kann ferner ohne große, hochstabile Kapazitäten mit den Zweigen verbunden werden. Es sei angemerkt, dass, auch wenn prinzipiell ein Vorverstärker ausreichend sein kann, keineswegs ausgeschlossen ist, dass mehr als ein Vorverstärker genutzt wird.

Die erfindungsgemäße Sensoranordnung kann ferner genau zwei oder auch mehr Strömungssensoren umfassen, die Bestandteil der Brückenschaltung sind. Sind zwei Strömungssensoren vorhanden, ist zweckmäßiger Weise jeweils einer in einem Zweig angeordnet. Von den zwei Strömungssensoren kann dann z.B. jeweils einer mit wenigstens einem festen Widerstand in einem der Zweige in Reihe geschaltet sein.

Insbesondere für den Fall, dass die Kompensationseinrichtung wenigstens ein Potentiometer umfasst oder durch ein solches gegeben ist, gilt dann weiter bevorzugt, dass das Potentiometer zu den zwei festen Widerständen parallelgeschaltet ist. Ein Anschluss des Potentiometers kann zum Beispiel - gemeinsam mit dem beiden Zweigen der Brückenschaltung - mit einer Gleichstromquelle verbunden sein, und zwei weitere Anschlüsse des Potentiometers jeweils mit einem Zweig, dies insbesondere an einer Anschlussstelle, die zwischen dem festen Widerstand und dem Strömungssensor des jeweiligen Zweiges liegt.

Auch ist es beispielsweise möglich, dass die erfindungsgemäße Sensoranordnung vier Strömungssensoren aufweist, von denen dann zweckmäßiger Weise jeweils zwei in einem der Zweige in Reihe geschaltet sind.

Insbesondere für den Fall, dass die Kompensationseinrichtung wenigstens ein Potentiometer umfasst oder durch ein solches gegeben ist, gilt dann weiter bevorzugt, dass das Potentiometer zu zwei der vier Strömungssensoren parallelgeschaltet ist. Ein Anschluss des Potentiometers kann zum Beispiel - gemeinsam mit dem beiden Zweigen der Brückenschaltung - mit einer Gleichstromquelle verbunden sein, und zwei weitere Anschlüsse des Potentiometers jeweils mit einem Zweig, dies insbesondere an einer Anschlussstelle, die zwischen den zwei Strömungssensoren des jeweiligen Zweiges liegt.

Gegenstand der Erfindung ist auch ein Gasanalysator, umfassend wenigstens eine erfindungsgemäße Sensoranordnung. Die Sensoranordnung kann dann beispielsweise genutzt werden, um einen Strömungswert bzw. eine Konzentration für wenigstens ein Messgas, beispielsweise Sauerstoff, zu ermitteln.

Die Erfindung betrifft ferner ein Verfahren zur Kalibrierung wenigstens einer erfindungsgemäßen Sensoranordnung, umfassend die Schritte:
- die die Strömungssensoren umfassende Brückenschaltung wird mit einem Gleichstrom gespeist,
- in einem Kalibrierbetrieb mit bekanntem oder ohne Fluidstrom durch die Strömungssensoren wird die Spannungsdifferenz zwischen den beiden Zweigen der Brückenschaltung, Brückenspannung, abgegriffen und verstärkt,
- wenigstens ein Widerstand der Kompensationseinrichtung wird bei Bedarf derart, insbesondere durch digitale Ansteuerung, verändert, dass die Brückenspannung im Kalibrierbetrieb einen kleineren Wert annimmt, bevorzugt bis auf null abfällt.

Mit anderen Worten kann vorgesehen sein, dass die erfindungsgemäße Sensoranordnung, beispielsweise im Rahmen einer Erstinbetriebnahme im unmittelbaren Anschluss an die Produktion, einem Kalibriervorgang unterzogen wird, im Rahmen dessen eine optimale Einstellung der Kompensationseinrichtung für die gegebene Sensoranordnung ermittelt wird.

Umfasst die Kompensationseinrichtung wenigstes ein Potentiometer oder ist dadurch gegeben, kann zum Beispiel vorgehen sein, dass das Potentiometer zunächst in eine neutrale mittlere Position gebracht wird. Dann wird mit anderen Worten keine "Störung" in die Brücke eingeführt. Das verstärkte DC-Signal wird dann gemessen und das Potentiometer - insbesondere durch digitale Ansteuerung- aus der mittleren Position herausgefahren, um den DC-Offset zu reduzieren. Dies kann in mehreren Iterationen wiederholt werden, bis der Brückenabgleich so nah an einen optimalen Abgleich gebracht wurde, wie möglich. Insbesondere für den Fall, dass ein digitales Potentiometer genutzt wird, ist mit den wählbaren digitalen Widerstandswerten das Erreichen eines 100%igen Abgleiches ggf. nicht möglich. Dann wird mit anderen Worten diejenige Einstellung gewählt, die diesem am nächsten kommt.

Derjenige Einstellwert, insbesondere Widerstandswert, der Kompensationseinrichtung, bei dem ein optimaler bzw. möglichst optimaler Abgleich vorliegt, kann als Einstell- bzw. Sollwert gespeichert werden.

Die genannten Kalibrierschritte können auch automatisch, insbesondere vollständig softwarebasiert ohne menschliches Eingreifen durchgeführt werden.

Die erfindungsgemäße Kalibrierung kann nur einmal, beispielsweise nach Abschluss der Produktion bzw. bei Inbetriebnahme, durchgeführt werden. Es ist natürlich auch möglich, dass die Kalibrierung wiederholt erfolgt. So kann in Weiterbildung vorgesehen sein, dass die Schritte des erfindungsgemäße Kalibrierverfahrens über die Betriebsdauer der Sensoranordnung wenigstens ein weiteres Mal, bevorzugt zyklisch, wiederholt werden. Dann können etwaig im Laufe der Betriebszeit auftretende Abweichungen berücksichtigt werden.

Gegenstand der Erfindung ist ferner ein Verfahren zur Zustandsüberwachung wenigstens einer erfindungsgemäßen Sensoranordnung, umfassend die Schritte:
- die die Strömungssensoren umfassende Brückenschaltung wird mit einem Gleichstrom gespeist,
- die Spannungsdifferenz zwischen den beiden Zweigen, Brückenspannung, wird abgegriffen und verstärkt,
- wenigstens ein Widerstand der Kompensationseinrichtung wird, insbesondere durch digitale Ansteuerung, um einen vorgegebenen Wert verändert,
- die resultierende Veränderung der Brückenspannung wird erfasst und mit einem erwarteten Wert verglichen und anhand des Ergebnisses des Vergleichs wird auf den Zustand der Sensoranordnung geschlossen.

In vorteilhafter Weiterbildung ist vorgesehen, dass für den Fall, dass die resultierende Veränderung der Brückenspannung nicht dem erwarteten Wert entspricht, davon ausgegangen wird, dass ein Defekt der Sensoranordnung, insbesondere wenigstens eines Strömungssensors dieser, vorliegt. Dann kann wenigstens ein Widerstand der Kompensationseinrichtung insbesondere um einen vorgegebenen Wert verändert werden, um den Defekt - zumindest teilweise, mit anderen Worten in gewissem Maße - zu kompensieren.

Weiterhin kann vorgesehen sein, dass ein Benutzer über den Defekt informiert und/oder ein Wartungsereignis zu dessen Behebung geplant wird. Der Benutzer kann z.B. informiert werden, indem die Sensoranordnung hierfür wenigstens eine Nachricht ausgibt.

Die Zustandsüberwachung hat sich u.a. für solche Strömungssensoren als besonders vorteilhaft erwiesen, die mehrere parallel geschaltete Leitungen bzw. Filamente aufweisen. Unterliegt eines von n Filamenten (n = 2, 3, 4,5, ...) einem Defekt, bricht es beispielsweise, steigt der effektive Widerstand um 1/n an. Mit der Anzahl der Filamente ist der Wert der fehlerbedingten Widerstandsänderung bekannt. Das erfindungsgemäße Verfahren zur Zustandsüberwachung kann sowohl dafür genutzt werden, einen solchen Fehler mit bekannter Widerstandänderung zu detektieren, als auch, um ihn zu kompensieren. Durch gezielte Ansteuerung der Kompensationseinrichtung kann ermittelt werden, ob eine solche Änderung des effektiven Widerstandes um 1/n vorliegt und, sofern dies der Fall ist, kann diese mit der Kompensationseinrichtung kompensiert werden und der Betrieb der Sensoranordnung kann trotz des Defektes weiterlaufen. Dies beispielsweise, bis eine ohnehin bereits eingeplante Wartung ansteht, im Rahmen derer ein Austausch des betroffenen Strömungssensors erfolgen kann.

Mittels des erfindungsgemäßen Verfahrens zur Zustandsüberwachung kann auch die Integrität der Signalkette einschließlich eines etwaig vorhandenen Vorverstärkers geprüft werden. Durch gezieltes "verstellen" der Kompensationseinrichtung, insbesondere des wenigstens einen Potentiometers, um einen vorgegebene Wert, was zum Beispiel auch während des regulären Betriebs erfolgen kann, verschiebt sich das DC-Offset nach dem Vorverstärker um einen vorgegebenen Wert. Dieser hängt von dem Brückenwiderstand selber und der DC-Verstärkung des Verstärkers ab. Wenn eine Brücke perfekt ausgeglichen ist, liegt ein DC-Offset von +-0V vor. Sobald die Brücke gezielt verstimmt wird, liegt ein DC-Offste ungleich 0V vor. Da alle Werte bekannt sind bzw. berechnet werden können, sollte eine bekannte Änderung der Einstellung der Kompensationseinrichtung, insbesondere des wenigstens einen Potentiometers, auch in eine bekannte DC-Offset-Veränderung resultieren. Dies kann gezielt genutzt werden, um Probleme, wie einen VerstärkungsDrift oder ADC-Probleme, in der Konfiguration zu detektieren. Ein ADC-Problem kann beispielsweise dadurch gegeben sein, dass ein ADC aufgrund eines internen Defektes falsche, wenngleich dem Anschein nach noch plausible Werte ausgibt, was auf diese Weise erkannt werden könnte.

Auch die vorstehend beschriebenen Optionen zur Zustandsüberwachung können vollständig automatisiert, insbesondere softwaregestützt ohne Eingriff eines Benutzers erfolgen. Wird ein Defekt identifiziert, kann ein Nutzer, insbesondere automatisiert, über diesen informiert werden. Es kann auch eine Neu-Kalibrierung bzw. Wartung bzw. Reparatur geplant bzw. durchgeführt werden.

Die Erfindung betrifft auch eine erfindungsgemäße Sensoranordnung mit Mitteln, die so angepasst sind, dass sie die Schritte des erfindungsgemäßen Verfahrens zur Kalibrierung und/oder die Schritte des erfindungsgemäßen Verfahrens zur Zustandsüberwachung ausführen.

Ein weiterer Gegenstand der Erfindung ist ein Computerprogrammprodukt, umfassend Befehle die bewirken, dass die Sensoranordnung die Schritte des erfindungsgemäßen Verfahrens zur Kalibrierung und/oder die Schritte des erfindungsgemäßen Verfahrens zur Zustandsüberwachung ausführt.

Die vorgenannten, optional vorhandenen Mittel der Sensoranordnung, die so angepasst sind, dass sie die Schritte des erfindungsgemäßen Verfahrens zur Kalibrierung und/oder die Schritte des erfindungsgemäßen Verfahrens zur Zustandsüberwachung ausführen, können zum Beispiel ein erfindungsgemäßes Computerprogrammprodukt umfassen oder dadurch gegeben sein.

Die erfindungsgemäße Sensoranordnung kann auch Speichermittel aufweisen, auf denen das erfindungsgemäße Computerprogramm abgelegt ist. Sie kann ferner einen Prozessor und Arbeitsspeicher zu dessen Ausführung umfassen.

Schließlich betrifft die Erfindung ein computerlesbares Medium, umfassend Befehle die bewirken, dass die Sensoranordnung die Schritte des erfindungsgemäßen Verfahrens zur Kalibrierung und/oder die Schritte des erfindungsgemäßen Verfahrens zur Zustandsüberwachung ausführt.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt in rein schematischer Darstellung
- FIG 1: das Schaltbild einer Sensoranordnung mit zwei in einer Brückenschaltung betriebenen thermischen Strömungssensoren, deren statische Grundwiderstände fertigungsbedingt voneinander abweichen,
- FIG 2: ein Schaltbild der Brückenschaltung aus FIG 1 mit einem AC-gekoppelten Vorverstärker für die Brückenspannung, der über je eine Kapazität mit einem der beiden Zweige verbunden ist,
- FIG 3: ein Schaltbild der Brückenschaltung aus FIG 1 mit einer der Anmelderin bekannten zweistufigen Verstärkerkonfiguration mit einem ersten DC-gekoppelten und einem zweiten AC-gekoppelten Vorverstärker, die über eine Kapazität verbunden sind,
- FIG 4: das Schaltbild eines ersten Ausführungsbeispiels einer erfindungsgemäßen Sensoranordnung mit zwei in einer Brückenanordnung betriebenen thermischen Strömungssensoren, deren statische Grundwiderstände fertigungsbedingt voneinander abweichen, einer Kompensationseinrichtung in Form eines digital einstellbaren Potentiometers und einem DC-gekoppelten Vorverstärker mit einem Verstärkungsfaktor von mehr als 2000,
- FIG 5: das Schaltbild eines zweiten Ausführungsbeispiels einer erfindungsgemäßen Sensoranordnung mit zwei in einer Brückenanordnung betriebenen thermischen Strömungssensoren, deren statische Grundwiderstände fertigungsbedingt voneinander abweichen, und einer Kompensationseinrichtung mit einem Digital-zu-Analog-Wandler, und
- FIG 6: das Schaltbild eines dritten Ausführungsbeispiels einer erfindungsgemäßen Sensoranordnung mit zwei in einer Brückenanordnung betriebenen thermischen Strömungssensoren, deren statische Grundwiderstände fertigungsbedingt voneinander abweichen, und einer Kompensationseinrichtung mit zwei Digital-zu-Analog-Wandlern.

In den Figuren sind gleiche bzw. einander entsprechende Komponenten mit gleichen Bezugszeichen versehen.

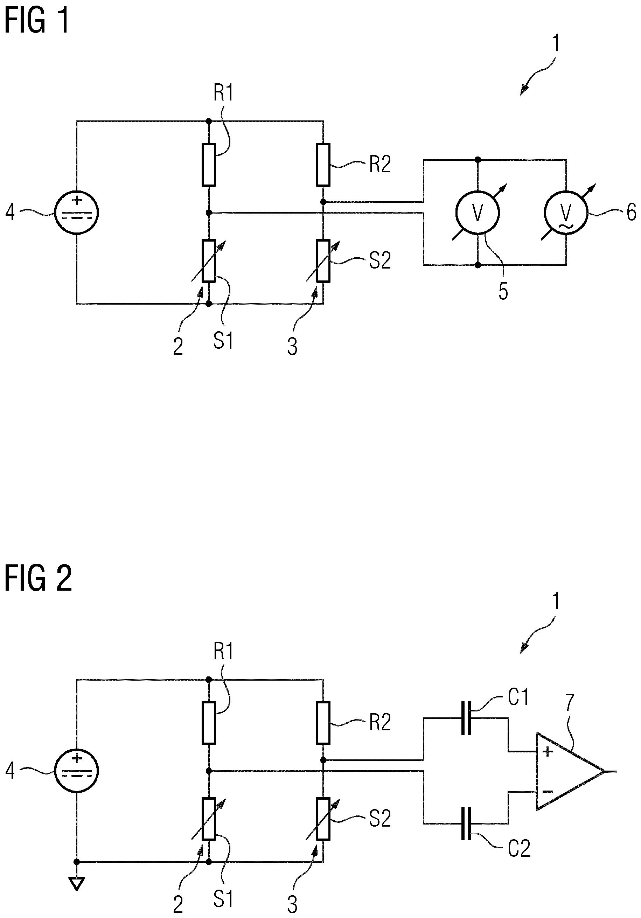

Die FIG 1 zeigt eine Sensoranordnung 1 mit zwei baugleichen, als Mikroströmungsfühler ausgebildeten thermischen Strömungssensoren S1 und S2, die zusammen mit zwei festen Widerständen R1 und R2 in einer Brückenschaltung angeordnet sind, konkret einer Wheatstone-Brücke. Die festen Widerstände R1 und R2 sind ebenfalls baugleich und belaufen sich auf 100 Ohm, wobei dies nur beispielhaft zu verstehen ist. Jeweils ein fester Widerstand R1, R2 und ein Strömungssensor S1, S2 der Sensoranordnung 1 sind in einem der beiden Zweige 2, 3 der Brückenschaltung in Reihe geschaltet und zwar der feste Widerstand R1 mit dem Strömungssensor S1 in Zweig 2 und der Widerstand R2 mit dem Strömungssensor S2 in Zweig 3.

Die Sensoranordnung 1 ist Bestandteil eines in den Figuren nicht weiter dargestellten Gasanalysators.

Die Strömungssensoren S1, S2 umfassen jeweils ein in den Figuren nicht erkennbares Metallfilament, welches für den Messbetrieb von einem Gleichstrom durchflossen und erwärmt wird. Für die Speisung ist eine Gleichspannungsquelle 4 vorhanden.

Die Strömungssensoren S1, S2 bzw. deren Filamente zeichnen sich durch einen stark temperaturabhängigen Widerstand aus. Daher sind die Strömungssensoren S1, S2 in der Figur auch jeweils mit dem Schaltsymbol eines variablen Widerstandes mit Pfeil dargestellt.

Werden die Strömungssensoren S1, S2 bzw. Filamente mit einem zu messenden Gas in Kontakt gebracht, welches sie z.B. umströmt bzw. überströmt, tritt ein Kühleffekt und damit eine Widerstandsänderung auf, die in der Brückenkonfiguration gut messbar ist. Dabei wird ein alternierendes AC-Signal genutzt, um zum Bespiel eine Gaskonzentration zu detektieren. Konkret wird das zu vermessende Gas bzw. ein Referenzgas abwechselnd in entgegengesetzten Richtungen über die beiden Strömungssensoren S1, S2 geführt. Zum Beispiel zuerst derart, dass das Gas von S1 zu S2 strömt (in FIG 1 von links nach rechts), dann in invertierter Richtung von S2 zu S1 (in FIG 1 von rechts nach links), dann wieder umgekehrt und so weiter. Der Wechsel erfolgt mit einer Frequenz. Die Sensoranordnung 1 bzw. der diese umfassende Gasanalysator sind entsprechend ausgebildet. Die Strömungssensoren S1, S2 können dabei zum Beispiel nebeneinander oder übereinander angeordnet sein.

Obwohl die Strömungssensoren S1, S2 baugleich sind, stimmen deren Grundwiderstandswerte nicht überein. Dies aus den weiter oben erläuterten fertigungstechnischen Herausforderungen. Bei der in FIG 1 dargestellten Anordnung beträgt der Grundwiderstand des Strömungssensors S1 62 Ohm und der Grundwiderstand des Strömungssensors S2 58 Ohm. Es sei betont, dass diese Werte nur beispielhaft zu verstehen sind. Natürlich können auch andere Werte sowie Abweichungen der Grundwiderstandswerte in einer Sensoranordnung 1 vorliegen.

Durch die Abweichung der Grundwiderstände ist die Brücke unabgeglichen und es wird - zusätzlich zu dem eigentlichen AC-Messsignal - ein DC-Offset der Brückenspannung bedingt. Im Idealfall gilt insbesondere, dass eine Schwingung um den Nullpunkt vorliegt. Bei einem Offset ist der Mittelpunkt der Schwingung verschoben, z.B. in den positiven Bereich. In der FIG 1 sind auch ein DC-Voltmeter 5 und ein AC-Voltmeter 6 dargestellt, mittels derer die Brückenspannung zwischen den beiden Zweigen 2, 3 gemessen werden kann. Man kann auch sagen, die Brückenspannung umfasst einen dem Messsignal entsprechenden AC-Signalanteil und ein überlagertes DC-Offset. Beispielsweise kann das AC-Messsignal 1 Millivolt und das DC-Offset aufgrund der Unabgeglichenheit 100 Millivolt betragen.

Es wäre prinzipiell denkbar, dieser Problematik damit zu begegnen, einen AC-gekoppelten Vorverstärker 7 mit hohem Verstärkungsfaktor von beispielsweise 500 oder 1000 zu nutzen. Ein zugehöriges Schaltbild kann der Figur 2 entnommen werden. Mittels diesem würde entsprechend nur oder stärker der AC-Messsignalanteil verstärkt. Ein solcher AC-gekoppelter Vorverstärker wäre jedoch über zwei Kapazitäten, insbesondere Kondensatoren C1, C2, mit den beiden Zweigen 2, 3 zu verbinden, wobei die Kapazitäten C1, C2 bestimmte Anforderungen zu erfüllen haben. Diese müssten für das niederfrequente AC-Signal sehr groß und hochstabil sein. Aufgrund physikalischer Beschränkungen genügen reale Kapazitäten C1, C2 diesen Anforderungen in der Regel nicht, was die Brauchbarkeit dieses Ansatzes stark beschränkt.

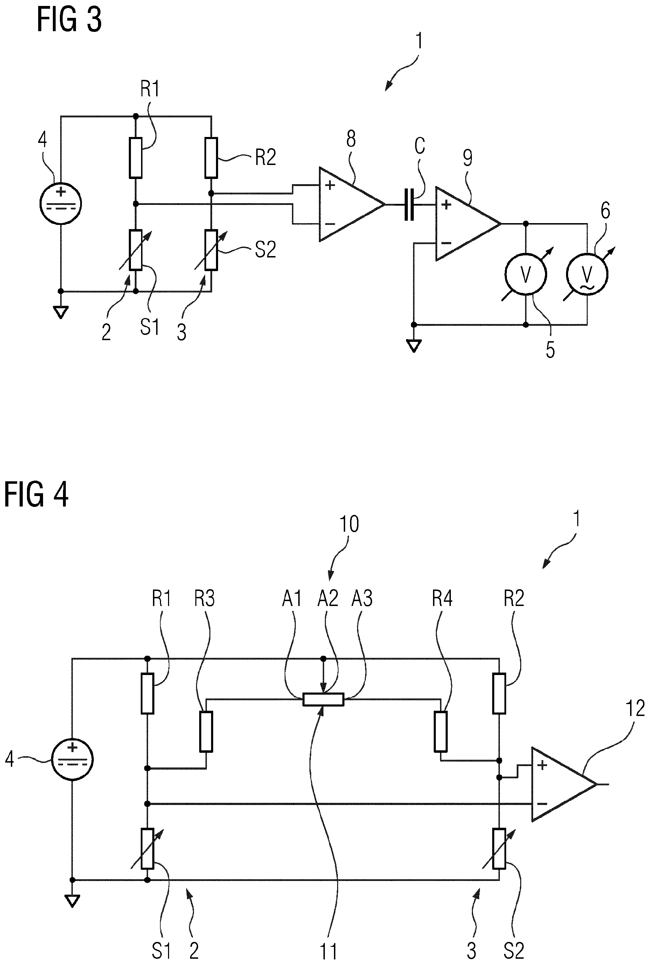

Ein alternatives Konzept ist in FIG 3 veranschaulicht. Bei diesem wird ein DC-gekoppelter Vorverstärker 8 mit geringem Verstärkungsfaktor genutzt, auf den ein zweiter, AC-gekoppelter Vorverstärker mit deutlich höherem Verstärkungsfaktor folgt. Vorliegend beträgt der Verstärkungsfaktor des DC-gekoppleten Vorverstärkers 8 20 und derjenige des AC-gekoppelten Vorverstärkers 9 200, wobei dies beispielhafte Werte sind. Hinter dem ersten Verstärker 8 würde - ausgehend von den vorgenannten Werten - das AC-Messsignal dann zum Beispiel bei 2 Volt liegen und der DC-Anteil bei 20 Millivolt. Hinter dem zweiten Verstärker 9 könnte der DC-Anteil 0 Volt betragen und das AC-Messsignal 4 Volt.

In diesem Szenario ist, wie in der Figur dargestellt, auch nur eine hochqualitative Kopplungs-Kapazität C zwischen den beiden Verstärkern 8, 9 erforderlich. Diese zeichnet sich jedoch durch vergleichsweise große Abmessungen aus.

Um auch große Abweichungen der Grundwiderstände der Strömungssensoren S1, S2 zulassen zu können, wäre ein besonders niedriger Verstärkungsfaktor der ersten Stufe 8 erforderlich. Dem steht die Problematik gegenüber, dass diese Stufe die Rausch-Performanz definiert. Kleine Signale, die aufgrund von Rauschen in der ersten Verstärkerstufe 8 verloren gehen, können später nicht zurückgewonnen werden.

Im Ergebnis können in der Konfiguration aus FIG 3 nur Strömungssensoren S1, S2 genutzt werden, deren Grundwiderstände nur vergleichsweise wenig voneinander abweichen.

Die FIG 4 zeigt das Schaltbild eines ersten Ausführungsbeispiels einer erfindungsgemäßen Sensoranordnung 1.

Diese umfasst - in völliger Analogie zu den Anordnungen aus den Figuren 1 bis 3 - eine Brückenschaltung mit zwei baugleichen Strömungssensoren S1 und S2 mit voneinander abweichenden Grundwiderständen, sowie zwei festen Widerständen R1 und R2, wobei der feste Widerstand R1 und Strömungssensor S1 in dem einen Zweig 2 in Reihe geschaltet sind, und der feste Widerstand R1 und Strömungssensor S2 in dem zweiten Zweig 3. Die festen Widerstände R1, R2 und Strömungssensoren S1, S2 können genauso ausgebildet sein, wie vorstehend im Zusammenhang mit den vorangegangenen Figuren erläutert, wobei dies nur beispielhaft zu verstehen ist. Auch hier gilt, in Analogie mit den vorangegangenen Figuren, dass eine Gleichspannungsquelle 4 zur Speisung und somit Erwärmung der Filamente im Messbetrieb vorgesehen ist.

Es sei angemerkt, dass alternativ zu den beiden festen Widerständen R1, R2 auch zwei weitere Strömungssensoren vorgesehen sein könnten, mit anderen Worten eine Brückenschaltung mit vier Strömungssensoren S1, S2, von denen jeweils zwei in einem Zweig 2, 3, in Reihe geschaltet sind.

Die erfindungsgemäße Sensoranordnung 1 weist in Abweichung zu den Anordnungen 1 aus Figur 1 bis 3 eine Kompensationseinrichtung 10 mit wenigstens einem bevorzugt digital einstellbaren Widerstandselement auf, mittels derer für die Abweichung der Grundwiderstandswerte der zwei Strömungssensoren S1, S2 im Messbetrieb kompensiert werden kann. Die Kompensationseinrichtung 10 ist dabei derart ausgebildet und in der Brückenschaltung angeordnet, dass mittels dieser einer gleichgewichtigen Stromversorgung der beiden Zweige 2, 3 entgegengewirkt werden kann, um so für die Abweichung der Grundwiderstandswerte der Strömungssensoren S1, S2 zu kompensieren.

Bei dem in FIG 4 gezeigten Ausführungsbeispiel umfasst die Kompensationseinrichtung ein digital einstellbaren Widerstandselement 10 in Form eines digitalen Potentiometers 1, dessen Widerstand durch digitale Ansteuerung variiert werden kann. Die Kompensationseinrichtung 10 umfasst bei dem hier gezeigten Ausführungsbeispiel ferner zwei feste Widerstände R3, R4, die zum Beispiel 1 Ohm betragen können und der Begrenzung dienen. Diese beiden festen Widerstände R3, R4 werden im Folgenden zur Abgrenzung gegenüber den beiden festen Widerständen R1 und R2 als weitere feste Widerstände bezeichnet.

Das digitale Potentiometer 12 hat drei Anschlüsse A1, A2, A3. Von den Anschlüssen A1, A2, A3 ist jeweils einer mit einem der Zweige 2, 3 verbunden, nämlich der Anschluss A1 mit dem ersten, in FIG 4 linken Zweig 2 und der Anschluss A3 mit dem zweiten, in FIG 4 rechten Zweig 3, dies jeweils über einen der beiden weiteren festen Widerstände R3, R4. Die Anschluss- bzw. Verbindungsstelle der Kompensationseinrichtung 10 in dem jeweiligen Zweig 2, 3 liegt erkennbar zwischen dem dortigen festen Widerstand R1 bzw. R2 und Strömungssensor S1 bzw. S2. Der verbleibende Anschluss A2 des digitalen Potentiometers 11 ist mit der Gleichspannungsquelle 4 verbunden. Der Pfeil an der Anschlussstelle A2 verdeutlicht in an sich bekannter Weise die gewählte Position des Potentiometers 11. Der Pfeil ist in der Figur beispielhaft in einer mittigen, neutralen Position.

Durch geeignete Wahl des Widerstandswertes des digitalen Potentiometers 11 kann für die Abweichung der Grundwiderstände der beiden Strömungssensoren S1 und S2 kompensiert werden.

Um das Potentiometer 11 optimal einzustellen, kann das im Folgende beschriebene Ausführungsbeispiel des erfindungsgemäßen Kalibrierverfahrens durchgeführt werden.

Dieses kann beispielsweise direkt im Anschluss an die Herstellung der Sensoranordnung 1 durchgeführt werden. Im Rahmen dieses wird die Brückenschaltung mit Gleichstrom gespeist, dies unter Nutzung der Quelle 4. In einem Kalibrierbetrieb mit bekanntem oder ohne Fluidstrom durch die Strömungssensoren S1, S2 wird die Spannungsdifferenz zwischen den beiden Zweigen 2, 3d er Brückenschaltung, also die Brückenspannung, abgegriffen und mit dem Vorverstärker 9 verstärkt. Ausgehend von der neutralen Mittelstellung des Potentiometers 11, in der es keine Störung in die Brückenschaltung einführt, wird der Widerstandswert des Potentiometers 11, insbesondere durch digitale Ansteuerung, derart verändert, dass die Brückenspannung im Kalibrierbetrieb, also das DC-Offset, einen kleineren Wert annimmt, bevorzugt bis auf null abfällt. Das DC-Offset wird mit anderen Worten durch geeignete Widerstandseinstellung reduziert, bevorzugt auf den kleinstmöglichen Wert. Die Schritte können auch mehrfach wiederholt werden, bis der Brückenabgleich so nah an einem optimalen Wert liegt, wie möglich.

Der im Rahmen der Kalibrierung gefundene optimale Widerstandswert kann einmalig ermittelt und gespeichert gespeichert werden. Es kann aber auch zyklisch dynamisch neu eingestellt werden.

Die Kalibrierung erfolgt bevorzugt ohne Eingriff seitens eines Benutzers vollständig softwaregestützt.

Aufgrund der gezielten Kompensation mittels des Potentiometers 11 können einerseits Strömungssensoren S1, S2 auch mit größerer Abweichungen in einer erfindungsgemäßen Sensoranordnung 1 verbaut werden. Weiterhin wird es möglich, einen DC-gekoppelten Vorverstärker 12 mit hohem Verstärkungsfaktor zu nutzen. Bei dem in FIG 4 dargestellten Ausführungsbeispiel beträgt der Verstärkungsfaktor 2000. Gleichzeitig wird eine hohe Unterdrückung der Brückenversorgungsspannung gewährleistet. Das Brückenversorgungsrauschen gleicht sich in einer abgeglichenen Brücke aus. Dies resultiert in ein niedrigeres Signalrauschen.

Die Kompensationseinrichtugn 10 kann auch für die Zustandsüberwachung der Sensoranordnung 1 genutzt werden.

Hierfür kann das Potentiometer 11 beispielsweise um einen vorgegebenen Wert verändert bzw. verstellt und der Einfluss auf die verstärkte Brückenspannung beobachtet werden. Es gilt insbesondere, dass die resultierende Veränderung der Brückenspannung erfasst und mit einem erwarteten Wert verglichen wird. Anhand des Ergebnisses des Vergleichs kann dann auf den Zustand der Sensoranordnung 1 geschlossen werden.

Die Brücke kann durch verstellen des Potentiometers 11 mit anderen Worten gezielt in einen unabgeglichenen Zustand gebracht werden. Hiermit geht eine Verschiebung des DC-Offsets einher. Diese hängt von dem Brückenwiderstand selber und dem DC-Verstärkungsfaktor des Vorverstärkers 12 ab. Da diese Grö-ßen bekannt sind bzw. berechnet werden können, sollte eine bekannte Änderung des Widerstandswertes des Potentiometers 11 in eine bekannte Veränderung des DC-Offsets resultieren. Dies kann genutzt werden, um z.B. eine Verstärkungsdrift bzw. ADC-Probleme, insbesondere eines der Wandlung des Ausgangs des Verstärkers 12 ins Digitale dienenden ADCs, zu detektieren. Diese Diagnostik kann insbesondere in einer sicheren Umgebung genutzt werden, um Sensor- sowie Signalpfadprobleme zu detektieren.

Wird ein Problem bzw. Defekt erkannt, wird zweckmäßiger Weise ein Benutzer informiert. Alternativ oder kann ein Wartungsereignis zu dessen Behebung geplant werden, mit anderen Worten eine vorausschauende Wartung (englisch: predictive maintenance) erfolgen.

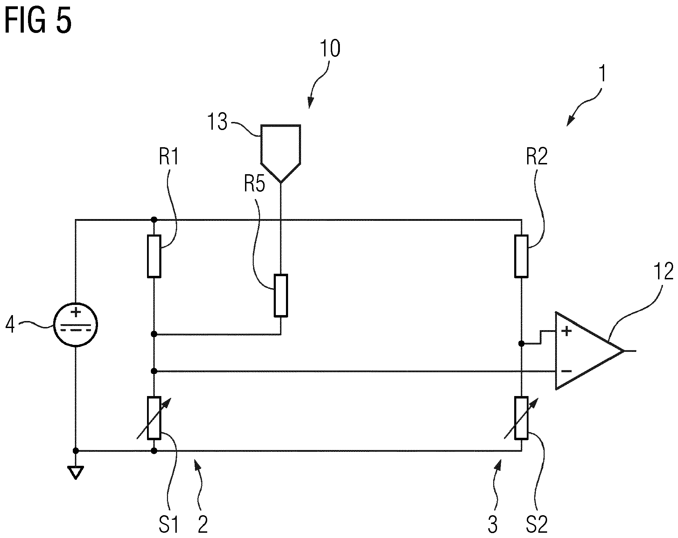

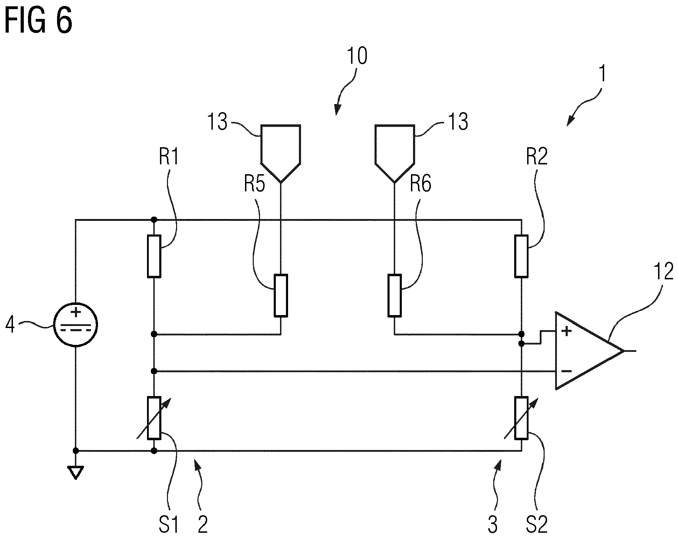

Die Figuren 5 und 6 zeigen zwei weitere Ausführungsbeispiele erfindungsgemäßer Sensoranordnungen 1 in schematischer Darstellung. Diese unterscheiden sich von dem Beispiel aus FIG 4 im Wesentlichen nur durch eine abweichende Ausgestaltung der Kompensationseinrichtung 10. Diese umfasst wenigstens einen Digital-zu-Analog Konverter 13 (kurz DAC) mit Spannungsausgang. Im Falle von FIG 5 ist nur ein DAC 13 und zwar - beispielhaft - für den linken Zweig 2 vorgesehen und bei dem Beispiel aus FIG 6 für jeden der beiden Zweige 2, 3 ein DAC 13. In beiden Fällen ist der DAC 13 ausgangsseitig mit dem jeweiligen Zweig 2, 3 verbunden, dies über einen weiteren festen Widerstand R5, R6, der wiederum dazu dient, den maximalen "Kompensations-Strom" zu limitieren. Der eine DAC 13 aus FIG 5 weist dabei einen bipolaren, mit dem Zweig 2 verbundenen Spanungsausgang auf, mit anderen Worten einen solchen, dessen Polarität einstellbar ist (positiv und negativ). Die beiden DACs 13 aus FIG 6 weisen jeweils einen unipolaren, insbesondere positiven Spannungsausgang auf, der mit dem jeweiligen Zweige 2, 3 verbunden ist.

Mittels des bzw. der DACs 13 aus den Figuren 5 bzw. 6 kann in analoger Weise, wie vorstehend im Zusammenhang mit dem Ausführungsbeispiel aus FIG 4 beschrieben, für die Abweichung der Grundwiderstände der beiden Strömungssensoren S1 und S2 kompensiert werden. Auch können diese in analoger Weise für eine Zustandsüberwachung genutzt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Sensoranordnung (1) mit wenigstens zwei bevorzugt thermischen Strömungssensoren (S1, S2), die in einer Brückenschaltung mit zwei Zweigen (2, 3) angeordnet sind, wobei sich jeweils wenigstens ein Strömungssensor (S1) in einem der beiden Zweige (2, 3) befindet, und wobei die Strömungssensoren (S1, S2) jeweils einen Grundwiderstandswert aufweisen, und die Grundwiderstandswerte der Strömungssensoren (S1, S2), insbesondere fertigungsbedingt, voneinander abweichen können, **dadurch gekennzeichnet, dass**
eine Kompensationseinrichtung (10) mit wenigstens einem bevorzugt digital einstellbaren Widerstandselement (11) vorgesehen ist, mittels derer für die Abweichung der Grundwiderstandswerte der wenigstens zwei Strömungssensoren (S1, S2) im Messbetrieb kompensiert werden kann.

2. Sensoranordnung (1) nach Anspruch 1,
**dadurch gekennzeichnet, dass**
die Kompensationseinrichtung (10) derart ausgebildet und insbesondere in der Brückenschaltung angeordnet ist, dass mittels dieser einer gleichgewichtigen Stromversorgung der beiden Zweige (2, 3) entgegengewirkt werden kann, um so für die Abweichung der Grundwiderstandswerte der Strömungssensoren (S1, S2) zu kompensieren.

3. Sensoranordnung (1) nach Anspruch 1 oder 2,
**dadurch gekennzeichnet, dass**
das wenigstens eine einstellbare Widerstandselement als bevorzugt digital einstellbares Potentiometer (11) ausgebildet ist, insbesondere, wobei das wenigstens eine Potentiometer (11) als Spannungsteiler geschaltet ist, bevorzugt, wobei das wenigstens eine Potentiometer (11) drei Abschlüsse (A1, A2, A3) aufweist, von denen jeweils einer mit einem der beiden Zweige (2, 3), insbesondere über einen wenigstens festen Widerstand (R3, R4), verbunden ist.

4. Sensoranordnung (1) nach Anspruch 3,
**dadurch gekennzeichnet, dass**
das wenigstens eine Potentiometer (11) als digitales Potentiometer ausgebildet ist, insbesondere als resistiver Digital-zu-Analog-Wandler.

5. Sensoranordnung (1) nach einem der vorhergehenden Ansprüche,
**dadurch gekennzeichnet, dass**
die Sensoranordnung (1) einen, bevorzugt genau einen Vorverstärker (12) umfasst, mit dem die Spannungsdifferenz zwischen den beiden Zweigen, Brückenspannung, verstärkt werden kann, bevorzugt, wobei der Vorverstärker (12) DC-gekoppelt ist und/oder sich durch einen Verstärkungsfaktor von 1000 oder mehr auszeichnet, bevorzugt im Bereich von 1000 bis 5000 liegt.

6. Sensoranordnung (1) nach einem der vorhergehenden Ansprüche,
**dadurch gekennzeichnet, dass**
zwei Strömungssensoren (S1, S2) vorgesehen sind, von denen jeweils einer mit wenigstens einem festen Widerstand (R1, R2) in einem der Zweige (2, 3) in Reihe geschaltet ist, oder dass vier Strömungssensoren (S1, S2) vorgesehen sind, von denen jeweils zwei in einem der Zweige (2, 3) in Reihe geschaltet sind.

7. Sensoranordnung (1) nach einem der vorhergehenden Ansprüche,
**dadurch gekennzeichnet, dass**
die Strömungssensoren (S1, S2) baugleich ausgebildet sind und/oder die Strömungssensoren (S1, S2) jeweils einen Mikroströmungsfühler umfassen oder durch einen solchen gegeben sind.

8. Sensoranordnung (1) nach einem der vorhergehenden Ansprüche mit Mitteln, die so angepasst sind, dass sie die Schritte des Verfahrens zur Kalibrierung nach einem der Ansprüche 12 oder 13 und/oder die Schritte des Verfahrens zur Zustandsüberwachung nach einem der Ansprüche 14 bis 16 ausführen.

9. Computerprogrammprodukt, umfassend Befehle die bewirken, dass die Sensoranordnung (1) nach Anspruch 8 die Verfahrensschritte nach einem der Ansprüche 12 oder 13 und/oder die Verfahrensschritte nach einem der Ansprüche 14 bis 16 ausführt.

10. Computerlesbares Medium, umfassend Befehle die bewirken, dass die Sensoranordnung (1) nach Anspruch 8 die Verfahrensschritte nach einem der Ansprüche 12 oder 13 und/oder die Verfahrensschritte nach einem der Ansprüche 14 bis 16 ausführt.

11. Gasanalysator umfassend wenigstens eine Sensoranordnung (1) nach einem der Ansprüche 1 bis 8.

12. Verfahren zur Kalibrierung wenigstens einer Sensoranordnung (1) nach einem der Ansprüche 1 bis 8, umfassend die Schritte:
- die die Strömungssensoren (S1, S2) umfassende Brückenschaltung wird mit einem Gleichstrom gespeist,
- in einem Kalibrierbetrieb mit bekanntem oder ohne Fluidstrom durch die Strömungssensoren (S1, S2) wird die Spannungsdifferenz zwischen den beiden Zweigen (2, 3) der Brückenschaltung, Brückenspannung, abgegriffen und verstärkt,
- wenigstens ein Widerstand der Kompensationseinrichtung (10) wird bei Bedarf derart, insbesondere durch digitale Ansteuerung, verändert, dass die Brückenspannung im Kalibrierbetrieb einen kleineren Wert annimmt, bevorzugt bis auf null abfällt.

13. Verfahren zur Kalibrierung nach Anspruch 12,
**dadurch gekennzeichnet, dass**
Schritte über die Betriebsdauer der Sensoranordnung (1) wenigstens ein weiteres Mal, bevorzugt zyklisch, wiederholt werden.

14. Verfahren zur Zustandsüberwachung wenigstens einer Sensoranordnung (1) nach einem der Ansprüche 1 bis 8, umfassend die Schritte:
- die die Strömungssensoren (S1, S2) umfassende Brückenschaltung wird mit einem Gleichstrom gespeist,
- die Spannungsdifferenz zwischen den beiden Zweigen der Brückenschaltung (2, 3), Brückenspannung, wird abgegriffen und verstärkt,
- wenigstens ein Widerstand (11) der Kompensationseinrichtung (10) wird, insbesondere durch digitale Ansteuerung, um einen vorgegebenen Wert verändert,
- die resultierende Veränderung der Brückenspannung wird erfasst und mit einem erwarteten Wert verglichen und anhand des Ergebnisses des Vergleichs wird auf den Zustand der Sensoranordnung (1) geschlossen.

15. Verfahren zur Zustandsüberwachung nach Anspruch 14,
**dadurch gekennzeichnet, dass**
für den Fall, dass die resultierende Veränderung der Brückenspannung nicht dem erwarteten Wert entspricht, davon ausgegangen wird, dass ein Defekt der Sensoranordnung (1), insbesondere wenigstens eines Strömungssensors (S1, S2) dieser vorliegt, bevorzugt, wobei zur Kompensation des Defektes wenigstens ein Widerstand der Kompensationseinrichtung (10) insbesondere um einen vorgegebenen Wert verändert wird.

16. Verfahren zur Zustandsüberwachung nach Anspruch 15,
**dadurch gekennzeichnet, dass**
ein Benutzer über den Defekt informiert und/oder ein Wartungsereignis zu dessen Behebung geplant wird.
